# EUROPEAN PATENT SPECIFICATION

(11) **EP 2 151 455 B1**
(45) Date of publication and mention of the grant of the patent: **14.11.2012**
(21) Application number: 09166071.2
(22) Date of filing: 22.07.2009
(51) Int. Cl.: C08C 19/02, C08F 236/08, C08F 236/10, C08F 236/12

(54) **Process for the continuous hydrogenation of carbon-carbon double bonds in an unsaturated polymer**
Verfahren zur kontinuierlichen Hydrierung von Kohlenstoff-Kohlenstoff-Doppelbindungen in einem ungesättigten Polymer
Procédé pour l'hydrogénation continue des liaisons de module carbone-carbone dans un polymère non saturé

(30) Priority: 24.07.2008 EP 08161098
(43) Date of publication of application: 10.02.2010
(73) Proprietor: LANXESS Inc., Sarnia, Ontario N7T 7M2 (CA)
(72) Inventor: Rempel, Garry, Waterloo Ontario N2T 2H4 (CA); Pan, Qinmin, Waterloo Ontario N2T 2W9 (CA); Madhuranthakam, Chandra Mouli, Waterloo Ontario N2L 1W4 (CA)
(74) Representative: Wichmann, Birgid

(56) References cited:
- EP-A- 1 245 591
- US-A1- 2008 262 161
- PAN Q ET AL: "Numerical investigation of continuous processes for catalytic hydrogenation of nitrile butadiene rubber" POLYMER ENGINEERING AND SCIENCE MAY 2002 SOCIETY OF PLASTICS ENGINEERS US, vol. 42, no. 5, May 2002 (2002-05), pages 899-910, XP002515027
- RUSNAC L M ET AL: "CONTINUOUS HYDROGENATION OF VEGETABLE OILS IN REACTORS EQUIPPED WITH STATIC MIXERS" JOURNAL OF THE AMERICAN OIL CHEMISTS' SOCIETY, SPRINGER, BERLIN, DE, vol. 69, no. 4, 1 April 1992 (1992-04-01), pages 384-386, XP000267588 ISSN: 0003-021X

## Description

The present invention is directed to a process for the continuous hydrogenation of carbon-carbon double bonds in an unsaturated polymer to produce a hydrogenated polymer, said unsaturated polymer being based on a conjugated diolefin and at least one other copolymerisable monomer, in the presence of a solvent and a catalyst, preferably a homogeneous catalyst.

Chemical reactions can be conducted in batch mode, continuous mode or semi batch mode operations. Hydrogenation of diene based polymers using a catalyst is usually realized by a semi batch process up until now.

US-B 5,561,197 and US-B 5,258,467 teach the production of hydrogenated polymers using organo-metallic catalysts in a semi batch mode.

Yet, most often, continuous processes are more advantageous in terms of operation, maintenance, production and cost. In general, the most common types of reactors used in a continuous process are continuous stirred tank reactors and tubular reactors. For heterogeneous hydrogenation reaction systems (where the catalyst used is in solid phase while the unsaturated polymer is in liquid phase), fluidized bed reactors, bubble columns and slurry reactors are typically used. For example, a fixed bed heterogeneous hydrogenation catalyst is used to hydrogenate low molecular weight polydienes which may contain functional groups such as hydroxyls (US-B 5,378,767).

Sometimes, depending on the throughput of the process, more than one reactor is used; US-B 6,080,372 discusses such an application where a three phase slurry hydrogenation of glucose is conducted in a series of continuous stirred tank reactors and bubble columns.

Static mixer reactors are receiving attention because of their low energy requirement. US-B 6,593,436 discloses how a static mixing plug flow reactor is used for manufacture of silicone copolymers. It also discloses the various general factors such as 1) rate of flow of the liquid mixture; 2) length of mixer element; 3) relative miscibility of reactants and 4) intensity of shear impacted by the static mixer element design and configuration that are considered in choosing a particular internal geometry of the static mixer reactor especially for processing high viscous polymers. They developed a process where at least two or more static mixers in series or parallel are used to produce the silicone copolymer. The advantage with this kind of alignment of reactors is that very high viscous copolymers can be produced at lower shear forces and lower energy inputs. Also, the process they studied consists of single phase reactants.

US-B 4,629,767 discusses a process for hydrogenation of diene polymers with a heterogeneous catalyst. They used an up-flow fixed bed reactor in their invention. The disadvantage with this type of reactor is that the heat transfer will not be efficient as some hot spots can occur in the fixed bed and also the pressure drop occurring in this type of reactor is very high compared to a static mixer reactor.

US-B 6,037,445 reveals a continuous process for functionalizing polymers where a liquid comprising the polymer and the gas having the functionalizing agent are introduced continuously at a dispersing zone and the dispersion zone being a static mixer of type Sulzer SMX® or SMXL® from Koch engineering or Kenics® helical mixers from Chemineer Inc. Their invention gives the details of the continuous process especially for carbonylation or manufacture of ester functionalized ethylene-butene-1 polymers.

US-B 7,057,064 involves a continuous process for enantioselective catalytic hydrogenation of betaketoesters, where a static mixer with several in-line mixers is used to enhance the mass transfer (absorption) of hydrogen into the solution. The process proposed by them is used to target non-polymer hydrogenation at very low mean residence time (in the order of 15 to 30 minutes).

In all the above documents, the static mixers are predominantly used for either creating high mass transfer (as they create high interfacial area) or as dispersers where uniform bubble size is needed. Also, in the above cited inventions, static mixers are rarely used as an one pass reactor operated with high mean residence times.

It was an objective of the present invention to provide a process for the hydrogenation of carbon-carbon double bonds in a nitrile rubber, wherein a high degree of hydrogenation can be achieved in a continuous process, with the benefit of low costs for both equipment and energy.

This objective is solved by a process for the continuous hydrogenation of carbon-carbon double bonds in a nitrile rubber to produce a hydrogenated nitrile rubber, in the presence of a solvent and a catalyst, wherein said nitrile rubber said catalyst and hydrogen are passed through a reactor equipped with static internal elements, which have an open blade geometry.

It has been found that static internal elements have a strong impact on the reactor's capability of creating eddies and vortices of sufficient intensity within the working fluids comprising diene polymers which are highly viscous and ensure a good performance of hydrogenation.

The internal elements have an open blade geometry.

The hydrogenation reaction is highly exothermic, especially at the very beginning of reaction, and accordingly, temperature control is of very high importance, especially when highly efficient catalysts are used, especially organo-metallic catalysts, preferably rhodium, ruthenium, osmium or iridium metal complex catalysts.

The polymers which are hydrogenated according to the present continuous process are nitrile rubberswhich contain carbon-carbon double bonds .

Further examples of suitable monomers are esters of ethylenically unsaturated mono- or dicarboxylic acids such as acrylic acid, methacrylic acid, maleic acid, fumaric acid and itaconic acid with generally C₁-C₁₂ alkanols, such as methanol, ethanol, n-propanol, isopropanol, 1- butanol, 2-butanol, isobutanol, tert.-butanol, n-hexanol, 2-ethylhexanol, or C₅-C₁₀ cycloalkanols, such as cyclopentanol or cyclohexanol, and of these prererably the esters of acrylic and/or methacrylic acid, examples being methyl methacrylate, n-butyl methacrylate, ter-butyl methacrylate, n-butyl acrylate, 2-ethylhexyl acrylate and tert butyl acrylate.

The hydrogenation of the polymer is undertaken in solution. Preferred solvents for the polymer and the hydrogenation process include benzene, toluene, xylene, monochlorobenzene and tetrahydrofuran, with monochlorbenzene and tetrahyrodofuran being more preferred and monochlorbenzene being most preferred. The concentration of the unsaturated polymer in the solvent may be from about 1 to about 40 wt.-%, preferably from about 2 to about 20 wt.-%.

The hydrogenation is undertaken in the presence of a homogeneous or heterogeneous catalyst, which preferably is an organo-metallic catalyst, most preferred a rhodium, ruthenium, titanium, osmium, palladium, platinum, cobalt, nickel or iridium either as metal or preferably in the form of metal compounds (cf., for example, US-A-3,700,637**,** DE-A-25 39132**,** EP-A-0 134 023**,** DE-A-35 41 6 8 9 **,** D E-A-35 40 918**,** EP-A-0 298 386**,** DE-A-35 29 2 5 2 **,** D E-A-34 33 392**,** US-A-4,464,515 **and** US-A-4,503,196**).**

Preferred metals for the heterogeneous catalyst are one or more metals selected from platinum, palladium, nickel, copper, rhodium and ruthenium. The heterogeneous catalyst can be preferably supported on carbon, silica, calcium carbonate or barium sulphate.

Preferably, the catalyst is a homogeneous catalyst.

Specially suited are osmium catalysts having the formula

Os QX(CO) (L) (PR₃)₂

in which Q may be one of hydrogen and a phenylvinyl group, X may be one of halogen, tetrahydroborate and alkyl- or aryl-carboxylate, L may be one of an oxygen molecule, benzonitrile or no ligand, and R may be one of cyclohexyl, isopropyl, secondary butyl and tertiary butyl said tertiary butyl being present only when one R is methyl, with the proviso that when Q is phenylvinyl X is halogen and L is no ligand and when X is alkyl- or aryl-carboxylate Q is hydrogen and L is no ligand, said halogen being selected from chlorine and bromine. Preferably, Q is hydrogen, X is selected from chlorine, tetrahydroborate and acetate, L is an oxygen molecule or no ligand and R is cyclohexyl or isopropyl. Additional alkyl- or aryl-carboxylates include chloroacetate and benzoate.

Examples of suitable osmium catalysts include OsHCl(CO)[P(cyclohexyl)₃]₂, OsHCl(CO)[P(isopropyl)₃]₂, OsHCl(O₂)(CO)[P(cyclohexyl)₃]₂, OsHCl(O₂)(CO)[P(isopropyl)₃]₂, Os(CH=CH-C₆H₅) Cl(CO)[P(cyclohexyl)₃]₂, Os(CH=CH-C₆H₅) Cl(CO)[P(isopropyl)₃]₂, OsH(BH₄) (CO)[P(cyclohexyl)₃]₂, OsH(BH₄) (CO)[P(isopropyl)₃]₂, OsH(CH₃COO) (CO)[P(cyclohexyl)₃]₂, OsH(CH₃COO) (CO)[P(isopropyl)₃]₂, O_{S}HCl(CO) (C₆ H₅ CN) [P(cyclohexyl)₃]₂, and OsHCl(CO) (C₆H₅CN) [P(isopropyl)₃]₂. Preferred catalysts are OsHCl (CO) [P(cyclohexyl)₃]₂, OsHCl(CO) [P(isopropyl)₃]₂, OsHCl(O₂) (CO) [P(cyclohexyl)₃]₂ and OsHCl (O₂) (CO) P(isopropyl)₃]₂.

The quantity of the osmium catalyst required for the hydrogenation process is from about 0.01 to about 1.0 wt.-% based on the polymer and preferably from about 0.02 to about 0.2 wt.-% based on the polymer.

The selective hydrogenation also can be achieved, for example, in the presence of a rhodium- or ruthenium-containing catalyst. It is possible to use, for example, a catalyst of the general formula

(R¹ₘB)₁ M Xₙ,

where M is ruthenium or rhodium, R¹ are identical or different and are each a C₁-C₈-alkyl group, a C₄-C₈-cycloalkyl group, a C₆-C₁₅-aryl group or a C₇-C₁₅-aralkyl group. B is phosphorus, arsenic, sulphur or a sulphoxide group S=O, X is hydrogen or an anion, preferably halogen and particularly preferably chlorine or bromine, 1 is 2, 3 or 4, m is 2 or 3 and n is 1, 2 or 3, preferably 1 or 3.

**Preferred catalysts are** tris(triphenylphosphine)rhodium(I) chloride, tris(triphenylphosphine)rhodium(III) trichloride and tris(dimethyl sulphoxide)rhodium(III) trichloride and also tetrakis(triphenylphosphine)rhodium hydride of the formula (C₆H₅)₃P)₄RhH and the corresponding compounds in which the triphenylphosphine has been completely or partly replaced by tricyclohexylphosphine. The catalyst can be utilized in small amounts. An amount in the range 0.01-1% by weight, preferably in the range 0.03-0.5% by weight and particularly preferably in the range 0.1-0.3% by weight, based on the weight of the polymer, is suitable.

In one embodiment of the present invention the catalyst can be used with a co-catalyst. Preferably this co-catalyst is a ligand of formula RₘB, where R, m and B are as defined above, and m is preferably 3. Preferably B is phosphorus, and the R groups can be the same or different. The R group of the catalyst may be a triaryl, trialkyl, tricycloalkyl, diaryl monoalkyl, dialkyl monoaryl, diaryl monocycloalkyl, dialkyl monocycloalkyl, dicycloalkyl monoaryl or dicycloalkyl monoaryl. Examples of suitable co-catalyst ligands are given in US Patent No. 4,631,315, the disclosure of which is incorporated by reference. The preferred co-catalyst ligand is triphenylphosphine. The co-catalyst ligand is preferably used in an amount in the range 0 to 5000%, more preferably 500 to 3000% by weight, based on the weight of catalyst. Preferably also the weight ratio of the co-catalyst to the rhodium-containing catalyst compound is in the range 0 to 50, more preferably in the range 5 to 30.

The catalyst may be introduced into one or more different chambers of the multistage reactor.

The hydrogenation is carried out at a temperature in the range of from 100°C to 260°C, preferably in the range of from 100°C to 180°C and a hydrogen pressure in the range of from 0.1 to about 50 MPa, preferably in the range of from 0.7 MPa to 50 MPa and more preferably in the range of from 3.5 to 10.5 MPa. Preferably, the temperature at the inlet of the reactor equipped with static internal elements is in the range of from 100 to 180°C and the hydrogen pressure is from 2 MPa to 15 MPa.

The term nitrile rubber, also referred to as "NBR" for short, refers to rubbers which are copolymers or terpolymers of at least one α, β-unsaturated nitrile, at least one conjugated diene and, if desired, one or more further copolymerizable monomers.

The conjugated diene can be of any nature. Preference is given to using (C₄-C₆) conjugated dienes. Particular preference is given to 1,3-butadiene, isoprene, 2,3-dimethylbutadiene, piperylene or mixtures thereof. Very particular preference is given to 1,3-butadiene and isoprene or mixtures thereof. Special preference is given to 1,3-butadiene.

As α,β-unsaturated nitrile, it is possible to use any known α,β-unsaturated nitrile, preferably a (C₃-C₅) α,β-unsaturated nitrile such as acrylonitrile, methacrylonitrile, ethacrylonitrile or mixtures thereof. Particular preference is given to acrylonitrile.

A particularly preferred nitrile rubber is thus a copolymer of acrylonitrile and 1,3-butadiene.

Apart from the conjugated diene and the α,β-unsaturated nitrile, it is possible to use one or more further copolymerizable monomers known to those skilled in the art, e.g. α,β-unsaturated monocarboxylic or dicarboxylic acids, their esters or amides. As α,β-unsaturated monocarboxylic or dicarboxylic acids, preference is given to fumaric acid, maleic acid, acrylic acid and methacrylic acid. As esters of α,β-unsaturated carboxylic acids, preference is given to using their alkyl esters and alkoxyalkyl esters. Particularly preferred alkyl esters of α,β-unsaturated carboxylic acids are methyl acrylate, ethyl acrylate, butyl acrylate, butyl methacrylate, 2-ethylhexyl acrylate, 2-ethylhexyl methacrylate and octyl acrylate. Particularly preferred alkoxyalkyl esters of α,β-unsaturated carboxylic acids are methoxyethyl (meth)acrylate, ethoxyethyl (meth)acrylate and methoxyethyl (meth)acrylate. It is also possible to use mixtures of alkyl esters, e.g. those mentioned above, with alkoxyalkyl esters, e.g. in the form of those mentioned above.

The proportions of conjugated diene and α,β-unsaturated nitrile in the NBR polymers to be used can vary within wide ranges. The proportion of or of the sum of the conjugated dienes is usually in the range from 40 to 90% by weight, preferably in the range from 55 to 75% by weight, based on the total polymer. The proportion of or of the sum of the α,β-unsaturated nitriles is usually from 10 to 60% by weight, preferably from 25 to 45% by weight, based on the total polymer. The proportions of the monomers in each case add up to 100% by weight. The additional monomers can be present in amounts of from 0 to 40% by weight, preferably from 0.1 to 40% by weight, particularly preferably from 1 to 30% by weight, based on the total polymer. In this case, corresponding proportions of the conjugated diene or dienes and/or of the α,β-unsaturated nitrile or nitriles are replaced by the proportions of the additional monomers, with the proportions of all monomers in each case adding up to 100% by weight.

The preparation of nitrile rubbers by polymerization of the abovementioned monomers is adequately known to those skilled in the art and is comprehensively described in the polymer literature.

Nitrile rubbers which can be used for the purposes of the invention are also commercially available, e.g. as products from the product range of the trade names Perbunan^{®} and Krynac^{®} from Lanxess Deutschland GmbH.

The nitrile rubbers used for the hydrogenation have a Mooney viscosity (ML 1+4 at 100°C) in the range from 30 to 70, preferably from 30 to 50. This corresponds to a weight average molecular weight M_{w} in the range 200 000 - 500 000, preferably in the range 200 000 - 400 000. The nitrile rubbers used also have a polydispersity PDI = M_{w}/Mₙ, where M_{w} is the weight average molecular weight and Mₙ is the number average molecular weight, in the range 2.0 - 6.0 and preferably in the range 2.0 - 4.0.

Hydrogenated nitrile rubber, also referred to as "HNBR" for short, is produced by hydrogenation of nitrile rubber. Accordingly, the C=C double bonds of the copolymerized diene units have been completely or partly hydrogenated in HNBR. The degree of hydrogenation of the copolymerized diene units is usually in the range from 50 to 100%.

Hydrogenated nitrile rubber is a specialty rubber which has very good heat resistance, excellent resistance to ozone and chemicals and also excellent oil resistance.

The above mentioned physical and chemical properties of HNBR are associated with very good mechanical properties, in particular, a high abrasion resistance. For this reason, HNBR has found wide use in a variety of applications. HNBR is used, for example, for seals, hoses, belts and clamping elements in the automobile sector, and also for stators, oil well seals and valve seals in the field of oil extraction and also for numerous parts in the aircraft industry, the electronics industry, mechanical engineering and shipbuilding.

Commercially available HNBR grades usually have a Mooney viscosity (ML 1+4 at 100°C) in the range from 35 to 105, which corresponds to a weight average molecular weight M_{w} (method of determination: gel permeation chromatography (GPC) against polystyrene equivalents) in the range from about 100 000 to 500 000. The polydispersity index PDI (PDI = M_{w}/Mₙ, where M_{w} is the weight average molecular weight and Mₙ is the number average molecular weight), which gives information about the width of the molecular weight distribution, measured here is in the range of 2,5 to 4,5. The residual double bond content is usually in the range from 1 to 18%.

The degree of hydrogenation depends on the polymer concentration, the amount of catalyst used, the gas and liquid flow rates and process conditions. The desired hydrogenation degree is from about 80 to about 99.5%, preferably from about 90 to about 99%.

The hydrogenation degree can be determined by using Fourier Transform Infrared (FTIR) or Proton Nuclear Magnetic Resonance (NMR) techniques.
According to the present invention, the disposition of the static mixer reactor can be vertical, horizontal or at any angle, or in coil shape, preferably vertical. The ratio of the length and the diameter could be from 1 up to any reasonable ratio; however, depending on the scale, usually it is preferably from 10 to 100.

It is required that the reactor be equipped with a heating and cooling system, preferably to be equipped with a jacket for heating and/or cooling fluids, the jacket having preferably two or more chambers which can be operated independently from each other. However, it is most preferably for the purpose of reducing cost and increasing productivity to locate the reactors in parallel as pipe heat exchangers which can significantly facilitate the design of the heating/cooling system. Similarly in such a way, the shell could be divided in zones to facilitate the temperature control.

In the present invention, a reactor is used which is equipped with static internal elements typically having an open blade geometry. Such blade structures can be some commercially available elements such as Sulzer SMX® or SMXL® or SMXL-R®, or SMF® or SMV® of Koch Engineering or Kenics® KMX of Chemineer Inc., or Kenics® helical elements. These elements have a geometry that can enhance radial mixing and reduce axial dispersion. The number of the elements equipped could be 2 to 100, preferably 6-36, and most preferably 6-24. The elements could be solid or hollow so that heating/cooling medium can flow through to facilitate the temperature control. Preferably, when the reactor diameter is less than 0.1 m, solid elements are used and when the reactor diameter is larger than 0.5 m, hollow elements are used. The advantage of using hollow elements is that each local temperature can be accurately controlled.

According to the present invention, the static mixer reactor can be equipped with or without a pre-mixer before the static mixer reactor.

In a preferred embodiment, a pre-mixer is used and the unsaturated polymer, the solvent and hydrogen are passed via a pre-mixer before sending to the reactor equipped with static internal elements.

The pre-mixer is preferably a cylinder tank equipped with an agitator having superior mixing performance. The cylinder tank could be disposed vertically or horizontally. The volume of the pre-mixer is preferably between 1% and 100% of the volume of the reactor, depending on the scale of the reactor. For example, when the volume in the scale is larger than 100 L the volume ratio of the pre-mixer and the reactor is preferably less than 20%, and further preferably less than 10%. The ratio of the length and the diameter is preferably from 0.5 to 3.0, more preferably from 0.5 to 1.0 when the pre-mixer is disposed vertically and from 1.0-3.0 when the pre-mixer is horizontally disposed. The pre-mixer can have one or multi-agitators, depending on the volume of the pre-mixer and also the way of the pre-mixer disposition (vertical or horizontal). Preferably, the agitator(s) in the pre-mixer is a high-shear type of agitator, such as a pitched blade agitator or turbines when the pre-mixer is disposed vertically, and turbines or deformed discs when the pre-mixer is horizontally disposed. A deformed disc here is such a disc impeller which is formed by scissor-cutting 12 or 16 lines evenly from the edge toward the center of the disc and the length of the lines is 1/3 to 2/5 of the diameter of the disc and by then twisting each such formed petal by a 30-60 degree in opposite directions for the adjacent petals. The ratio of the agitator diameter and the inner diameter of the pre-mixer is preferably 1/3-19/20, depending on the viscosity and the disposition of the pre-mixer. Preferably, for example, when the viscosity is less than 200 cp (0.2 Pas) and the pre-mixer is vertically disposed, the diameter ratio is from 1/3 to 2/3, and when the viscosity is less than 200 cp (0.2 Pas) and the pre-mixer is horizontally disposed, the diameter ratio is larger than 2/3.

The catalyst can be added to both the pre-mixer and/or to the reactor equipped with static internal elements. It is possible to add the catalyst to the reactor equipped with static internal elements at one or more different sections along the length thereof.

The reactor of this invention is preferably operated in such a way that the unsaturated polymer solution, the catalyst and hydrogen are pumped vertically from bottom to top of the reactor equipped with static internal elements.

Hydrogen can be introduced into the reaction system from the pre-mixer or the static mixer reactor via a gas sparger, in order to ensure uniform distribution thereof, or from both the pre-mixer and the static mixer reactor.

In another embodiment of the invention, the reactor equipped with static internal elements and the pre-mixer is operated in a loop mode.

The product mixture obtained in the reactor is preferably cooled in a heat exchanger and the product mixture cooled from the heat exchanger is preferably sent to a gas/liquid separator.

The invention is described in the following by way of drawings and of examples.

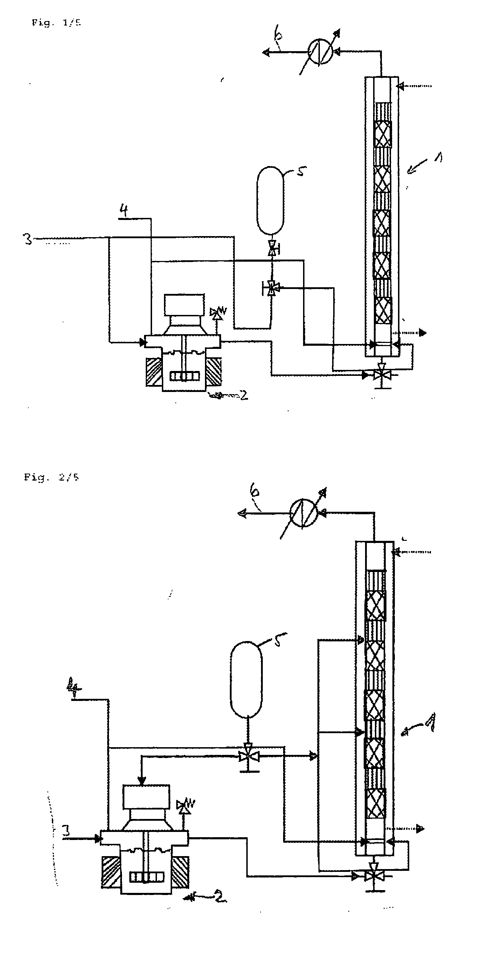

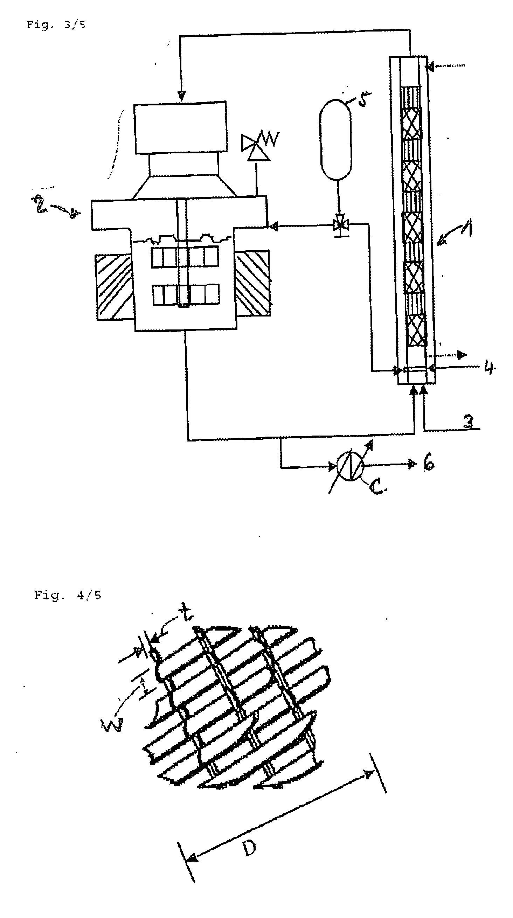

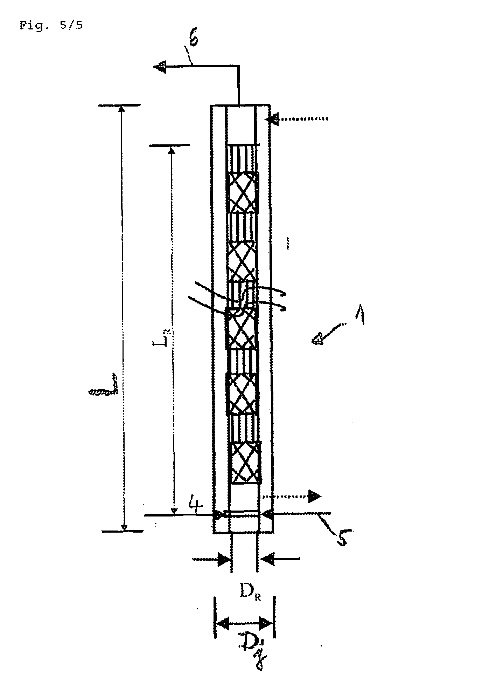

The drawing in **Fig. 1** shows a schematic representation of one embodiment of the inventive process,
a further configuration being shown in **Fig. 2****,**
a still further configuration in **Fig. 3****,**
a Kenics®-KMX element preferably used in the reactor in **Fig. 4** and
a preferred embodiment of the reactor equipped with static internal elements in **Fig. 5****.**
**Fig. 1** shows a first configuration illustrating the schematic design for a preferred embodiment for the continuous production of hydrogenated elastomer according to the invention. Reference no. 1 denotes a reactor equipped with static internal elements with steam being fed in the upper part and drawn off in the lower part thereof. Reference no. 2 denotes a pre-mixer. A solution of unsaturated polymer 3 is fed to the reactor 1 equipped with static internal elements, as well as hydrogen 4 and catalyst 5. Product 6 is drawn off at the upper end of the static mixer reactor 1.
**Fig. 2** shows a further configuration of a schematic design for the continuous production of hydrogenated elastomer according to the present invention, wherein catalyst 5 is fed to different sections along the length of the static mixer reactor 1 in addition to the main catalyst stream that enters at the entrance in the lower part of the static mixer reactor.
   Since the hydrogenation reaction is highly exothermic, for higher concentrations of polymer solution, it is very difficult to control the reaction temperature along the length of the static mixer reactor. The configuration shown in Fig. 2 is beneficial to operate the static mixer reactor isothermally. Also, the temperature in the jacket at various sections can be controlled by designing it into separate zones which are accessible to either cooling or heating.
**Fig. 3** shows a further preferred embodiment, involving operating the pre-mixer 2 and the reactor 1 equipped with static internal elements in a loop mode. The unsaturated polymer and hydrogen enter the reactor equipped with static internal elements along with the catalyst. The reacted polymer from the reactor 1 equipped with static internal elements is then passed into the pre-mixer 2 where part of the catalyst is added. The main product from the pre-mixer 2 then passes through the condenser C and is withdrawn as stream 6, while part of the product is sent in loop mode to the reactor 1 equipped with static internal elements. This mode of operation is especially advantageous when very high polymer concentrations are used for hydrogenation.
**Fig. 4** shows the structure of the static internal elements having open blade geometry (Kenics-KMX® as an example).

The static internal elements in the reactor are arranged such that each element would be at a 90° angle with its neighboring element. The aspect ratio (length to diameter ratio of the static internal element) is preferably from 0.5 to 3, further preferably from 0.5 to 1.5.

The detail of the structure is shown in Fig. 4: The diameter, D, is, in the preferred embodiment shown, 3.81 cm and the thickness of the blade, t, is 0.19 cm, while the width of the blade, w, is 0.48 cm.

The length and diameter of the reactor equipped with static internal elements is designed and configured such that the reactants have sufficient residence time to achieve maximum hydrogenation degree. Typical dimensions of the reactor according to the invention are shown in Fig. 5.

The reactor 1 has a steam jacket with an interior diameter of Dⱼ of 6.35 cm, while the reactor itself has an interior diameter D_{R} of 3.81 cm. The jacket is made of steel 40 S, while the reactor itself is made of steel 80 SS. The length of the reactor zone L_{R} equipped with the static internal elements is 93.76 cm, while the total length of the reactor L is 123.19 cm.

The reactants are pumped into a preheater, while the mixture is heated before it enters the reactor 1 equipped with static internal elements. At the entrance of the reactor 1 equipped with static internal elements, a gas sparger is used to distribute the hydrogen 4 uniformly. The catalyst solution 5 is pumped from the catalyst bomb simultaneously with the reactants from the preheater.

The following examples illustrate the scope of the invention but are not intended to limit the same.

### Example 1

A reactor 1 equipped with 24 mixing elements having open blade internal structure and the geometry indicated in Fig. 5 and a gas sparger with 1 millimeter holes was used to hydrogenate a butadiene acrylonitrile polymer which had an acrylonitrile content of about 38 weight percent (used as a solution in monochlorobenzene). Osmium based complex with molecular formula OsHCl(CO)[P(cyclohexyl)₃]₂ was used as catalyst in the form of solution in monocholorbenzene. The hydrogen was used as essentially pure gas. A 2.5 weight percent of the polymer solution in monochlorobenzene was used and a 80 µM catalyst was used with operating temperature and pressure being 138° C and 3.45 MPa respectively. The maximum hydrogenation degree achieved in the continuous process was 98%. The details are shown in Table I.

**TABLE I**

| **Parameter** | **Value** |
|---|---|
| Polymer Concentration | 2.5% (w/w) |
| Catalyst Concentration | 80 µM |
| Temperature | 138 C |
| Pressure | 3.45 MPa |
| Hydrogen Flow Rate | 3535 ml/min (144 ml/min in reactor) |
| Polymer Flow Rate | 24 ml/min |
| Mean Residence Time | 35.03 min |
| Reaction Time | 180 min |
| Liquid hold-up | 0.90 |
| Catalyst to Polymer Flow Ratio | 1 : 5 |

The hydrogenation degree obtained in the continuous reactor after steady state for different mean residence time is shown in TABLE II.

**TABLE II**

| Mean Residence Time (minutes) | Degree of Hydrogenation (%) |
|---|---|
| 8.75 | 72.01 |
| 17.5 | 88.32 |
| 26.25 | 95.67 |
| 35 | 98.09 |

### Example 2

The process described under Example 1 was repeated, except the catalyst concentration being 130 µM and with different hydrogen flow rate, hydrogenation of the unsaturated polymer and the operating conditions mentioned in Table III. In this case the concentration of the unsaturated polymer is twice that of the polymer used in Example 1 and hence the liquid hold up was less.

**TABLE III**

| **Parameter** | **Value** |
|---|---|
| Polymer Concentration | 5.0% (w/w) |
| Catalyst Concentration | 130 µM |
| Temperature | 138 C |
| Pressure | 3.45 MPa |
| Hydrogen Flow Rate | 3535 ml/min (144 ml/min in reactor) |
| Polymer Flow Rate | 23 ml/min |
| Mean Residence Time | 35.7 min |
| Reaction Time | 180 min |
| Liquid hold-up | 0.88 |
| Catalyst to Polymer Flow Ratio | 1 : 6.7 |

The degree of hydrogenation obtained in the continuous process after steady state with the conditions mentioned in TABLE III is shown in TABLE IV.

**TABLE IV**

| Mean Residence Time (minutes) | Degree of Hydrogenation (%) |
|---|---|
| 8.37 | 64.8 |
| 16.75 | 82.3 |
| 25.13 | 91.7 |
| 33.4 | 96.4 |

## Claims

1. A process for the continuous hydrogenation of carbon-carbon double bonds in a nitrite rubber to produce a hydrogenated nitrile rubber, in the presence of a solvent and a catalyst, wherein said nitrile rubber, said catalyst and hydrogen are passed through a reactor equipped with static internal elements, which have an open blade geometry.

2. The process according to claim 1, wherein the temperature in the reactor equipped with static internal elements is in range of from 100 and 260°C, preferably from 100°C to 180°C and the pressure in the reactor equipped with static internal elements is in the range of from 0.1 to 50 MPa, preferably between 0.7 MPa to 50 MPa, and more preferably from about 3.5 to 10.5 MPa.

3. The process according to claim 1 or 2, wherein said catalyst is either a homogeneous catalyst or a heterogeneous catalyst.

4. The process according to one of claims 1 to 3, wherein said catalyst is an organo-metallic catalyst, preferably rhodium, ruthenium, titanium, osmium, palladium, platinum, cobalt, nickel or iridium either as metal or in the form of metal compounds.

5. The process according to claim 3, wherein said heterogeneous catalyst includes one or more of the metals platinum, palladium, nickel, copper, rhodium and ruthenium and is preferably supported on carbon, silica, calcium carbonate or barium sulphate.

6. The process according to claim 4, wherein the organo-metallic catalyst is a rhodium- or ruthenium-containing complex catalyst having the formula
(R¹ₘB)ₗ M Xₙ,
where M is ruthenium or rhodium, R¹ are identical or different and are each a C₁-C₈-alkyl group, a C₄-C₈-cycloalkyl group, a C₆-C₁₅-aryl group or a C₇-C₁₅-aralkyl group. B is phosphorus, arsenic, sulphur or a sulphoxide group S=O, X is hydrogen or an anion, preferably halogen and particularly preferably chlorine or bromine, 1 is 2, 3 or 4, m is 2 or 3 and n is 1, 2 or 3, preferably 1 or 3, specially preferred catalysts being tris(triphenylphosphine)rhodium(I) chloride, tris(triphenylphosphine)rhodium(III) trichloride and tris(dimethylsulphoxide)rhodium(III) trichloride and tetrakis(triphenylphosphine)rhodium hydride of the formula (C₆H₅)₃P)₄RhH and the corresponding compounds in which the triphenylphosphine has been completely or partly replaced by tricyclohexylphosphine.

7. The process according to claim 4, wherein the organo-metallic catalyst is an osmium-containing catalyst having the formula
Os QX(CO) (L) (PR₃)₂
in which Q may be one of hydrogen and a phenylvinyl group, X may be one of halogen, tetrahydroborate and alkyl- or aryl-carboxylate, L may be one of an oxygen molecule, benzonitrile or no ligand, and R may be one of cyclohexyl, isopropyl, secondary butyl and tertiary butyl said tertiary butyl being present only when one R is methyl, with the proviso that when Q is phenylvinyl X is halogen and L is no ligand and when X is alkyl- or aryl-carboxylate Q is hydrogen and L is no ligand, said halogen being selected from chlorine and bromine, and preferably Q being hydrogen, X being selected from chlorine, tetrahydroborate and acetate, L being an oxygen molecule or no ligand and R being cyclohexyl or isopropyl.

8. The process according to one of claims 1 to 7, wherein there is also present a co-catalyst, preferably triphenylphosphine.

9. The process according to one of claims 1 to 8, wherein the continuous hydrogenation is carried out in the presence of a hydrocarbon solvent, preferably selected from benzene, toluene, xylene, monochlorobenzene and tetrahydrofuran, preferably monochlorobenzene and tetrahydrofuran, most preferably monochlorobenzene.

10. The process according to one of claims 1 to 9, wherein the reactor (1) equipped with static internal elements has a jacket for heating and/or cooling, preferably having two or more chambers which can be operated independently.

11. The process according to one of claims 1 to 10, wherein the nitrile rubber, the solvent and the hydrogen are passed via a pre-mixer before sending to the reactor equipped with static internal elements.

12. The process according to claim 11, wherein the catalyst is added to the pre-mixer and/or to the reactor equipped with static internal elements.

13. The process according to one of claims 1 to 12, wherein the catalyst is added to the reactor equipped with static internal elements at one or more different sections along the length thereof.

14. The process according to claims 11 or 12, wherein the pre-mixer is equipped with an agitator, this being preferably a pitched blade agitator or a turbine.

## Patentansprüche

1. Verfahren zur kontinuierlichen Hydrierung von Kohlenstoff-Kohlenstoff-Doppelbindungen in einem Nitrilkautschuk zur Herstellung eines hydrierten Nitrilkautschuks in Gegenwart eines Lösungsmittels und eines Katalysators, bei dem man den Nitrilkautschuk, den Katalysator und Wasserstoff durch einen mit statischen Einbauten mit offener Blattgeometrie ausgestatteten Reaktor führt.

2. Verfahren nach Anspruch 1, bei dem die Temperatur in dem mit statischen Einbauten ausgestatteten Reaktor im Bereich von 100 bis 260°C, vorzugsweise von 100°C bis 180°C, liegt und der Druck in dem mit statischen Einbauten ausgestatteten Reaktor im Bereich von 0,1 bis 50 MPa und vorzugsweise zwischen 0,7 MPa und 50 MPa liegt und weiter bevorzugt etwa 3,5 bis 10,5 MPa beträgt.

3. Verfahren nach Anspruch 1 oder 2, bei dem es sich bei dem Katalysator entweder um einen homogenen Katalysator oder um einen heterogenen Katalysator handelt.

4. Verfahren nach einem der Ansprüche 1 bis 3, bei dem es sich bei dem Katalysator um einen metallorganischen Katalysator, vorzugsweise Rhodium, Ruthenium, Titan, Osmium, Palladium, Platin, Cobalt, Nickel oder Iridium entweder als Metall oder in Form von Metallverbindungen, handelt.

5. Verfahren nach Anspruch 3, bei dem der heterogene Katalysator eines oder mehrere der Metalle Platin, Palladium, Nickel, Kupfer, Rhodium und Ruthenium enthält und vorzugsweise auf Kohle, Siliciumdioxid, Calciumcarbonat oder Bariumsulfat geträgert ist.

6. Verfahren nach Anspruch 4, bei dem es sich bei dem metallorganischen Katalysator um einen rhodium- oder rutheniumhaltigen Komplexkatalysator mit der Formel
(R¹ₘB)ₗMXₙ
handelt, wobei M für Ruthenium oder Rhodium steht, die Reste R¹ gleich oder verschieden sind und jeweils für eine C₁-C₈-Alkylgruppe, eine C₄-C₈-Cycloalkylgruppe, eine C₆-C₁₅-Arylgruppe oder eine C₇-C₁₅-Aralkylgruppe stehen, B für Phosphor, Arsen, Schwefel oder eine Sulfoxidgruppe S=O steht, X für Wasserstoff oder ein Anion, vorzugsweise Halogen und besonders bevorzugt Chlor oder Brom, steht, 1 für 1, 2, 3 oder 4 steht, m für 2 oder 3 steht und n für 1, 2 oder 3, vorzugsweise 1 oder 3, steht, wobei Tris(triphenylphosphin)rhodium(I)-chlorid, Tris(triphenylphosphin)rhodium(III)-trichlorid und Tris(dimethylsulfoxid)rhodium(III)-trichlorid und Tetrakis(triphenylphosphin)rhodiumhydrid der Formel ((C₆H₅)₃P)₄RhH und die entsprechenden Verbindungen, in denen das Triphenylphosphin vollständig oder teilweise durch Tricyclohexylphosphin ersetzt worden ist, speziell bevorzugte Katalysatoren sind.

7. Verfahren nach Anspruch 4, bei dem es sich bei dem metallorganischen Katalysator um einen osmiumhaltigen Katalysator mit der Formel
OsQX(CO) (L) (PR₃)₂
handelt, in der Q für Wasserstoff oder eine Phenylvinylgruppe stehen kann, X für Halogen, Tetrahydroborat oder Alkyl- oder Arylcarboxylat stehen kann, L für ein Sauerstoffmolekül, Benzonitril oder keinen Liganden stehen kann und R für Cyclohexyl, Isopropyl, sec.-Butyl und tert.-Butyl stehen kann, wobei das tert.-Butyl nur vorhanden ist, wenn ein R für Methyl steht, mit der Maßgabe, dass dann, wenn Q für Phenylvinyl steht, X für Halogen steht und L für keinen Liganden steht, und dann, wenn X für Alkyl- oder Arylcarboxylat steht, Q für Wasserstoff steht und L für keinen Liganden steht, wobei das Halogen aus Chlor und Brom ausgewählt ist und vorzugsweise Q für Wasserstoff steht, X aus Chlor, Tetrahydroborat und Acetat ausgewählt ist, L für ein Sauerstoffmolekül oder keinen Liganden steht und R für Cyclohexyl oder Isopropyl steht.

8. Verfahren nach einem der Ansprüche 1 bis 7, bei dem außerdem auch noch ein Cokatalysator, vorzugsweise Triphenylphosphin, vorliegt.

9. Verfahren nach einem der Ansprüche 1 bis 8, bei dem man die kontinuierliche Hydrierung in Gegenwart eines Kohlenwasserstoff-Lösungsmittels durchführt, das vorzugsweise aus Benzol, Toluol, Xylol, Monochlorbenzol und Tetrahydrofuran, vorzugsweise Monochlorbenzol und Tetrahydrofuran, ganz besonders bevorzugt Monochlorbenzol, ausgewählt wird.

10. Verfahren nach einem der Ansprüche 1 bis 9, bei dem der mit statischen Einbauten ausgestattete Reaktor (1) einen Mantel zum Erwärmen und/oder Abkühlen, vorzugsweise mit zwei oder mehr Kammern, die unabhängig voneinander betrieben werden können, aufweist.

11. Verfahren nach einem der Ansprüche 1 bis 10, bei dem man den Nitrilkautschuk, das Lösungsmittel und den Wasserstoff vor der Zufuhr zu dem mit statischen Einbauten ausgestatteten Reaktor durch einen Vormischer führt.

12. Verfahren nach Anspruch 11, bei dem man den Katalysator zu dem Vormischer und/oder dem mit statischen Einbauten ausgestatteten Reaktor gibt.

13. Verfahren nach einem der Ansprüche 1 bis 12, bei dem die Zugabe des Katalysators zu dem mit statischen Einbauten ausgestatteten Reaktor an einem oder mehreren verschiedenen Abschnitten entlang der Länge des Reaktors erfolgt.

14. Verfahren nach Anspruch 11 oder 12, bei dem der Vormischer mit einem Rührer ausgestattet ist, bei dem es sich vorzugsweise um einen Schrägblattrüher oder eine Turbine handelt.

## Revendications

1. Procédé pour l'hydrogénation continue de doubles liaisons carbone-carbone dans un caoutchouc nitrile pour produire un caoutchouc nitrile hydrogéné, en présence d'un solvant et d'un catalyseur, dans lequel ledit caoutchouc nitrile, ledit catalyseur et l'hydrogène sont passés à travers un réacteur équipé d'éléments internes statiques, qui ont une géométrie de pale ouverte.

2. Procédé selon la revendication 1, dans lequel la température dans le réacteur équipé d'éléments internes statiques est dans la plage de 100 à 260 °C, de préférence de 100 °C à 180 °C et la pression dans le réacteur équipé d'éléments internes statiques est dans la plage de 0,1 à 50 MPa, de préférence entre 0,7 MPa et 50 MPa, et plus préférablement d'environ 3,5 à 10,5 MPa.

3. Procédé selon la revendication 1 ou 2, dans lequel ledit catalyseur est un catalyseur homogène ou un catalyseur hétérogène.

4. Procédé selon une des revendications 1 à 3, dans lequel ledit catalyseur est un catalyseur organométallique, de préférence rhodium, ruthénium, titane, osmium, palladium, platine, cobalt, nickel ou iridium sous forme de métal ou sous la forme de composés métalliques.

5. Procédé selon la revendication 3, dans lequel ledit catalyseur hétérogène comprend un ou plusieurs des métaux platine, palladium, nickel, cuivre, rhodium et ruthénium et est de préférence soutenu sur carbone, silice, carbonate de calcium ou sulfate de baryum.

6. Procédé selon la revendication 4, dans lequel le catalyseur organométallique est un catalyseur de complexe de rhodium ou ruthénium ayant la formule
(R¹ₘB)₁MXₙ,
où M est ruthénium ou rhodium, R¹ sont identiques ou différents et sont chacun un groupe alkyle en C₁-C₈, un groupe cycloalkyle en C₄-C₈, un groupe aryle en C₆-C₁₅ ou un groupe aralkyle en C₇-C₁₅, B est phosphore, arsenic, soufre ou un groupe sulfoxyde S=O, X est hydrogène ou un anion, de préférence halogène et de façon particulièrement préférable chlore ou brome, l est 2, 3 ou 4, m est 2 ou 3 et n est 1, 2 ou 3, de préférence 1 ou 3, de façon particulièrement préférable des catalyseurs étant chlorure de tris(triphénylphosphine)rhodium (I), trichlorure de tris(triphénylphosphine)rhodium (III) et trichlorure de tris(diméthylsulfoxyde)rhodium (III) et hydrure de tétrakis(triphénylphosphine)rhodium de formule (C₆H₅)₃P)₄RhH et les composés correspondants dans lesquels la triphénylphosphine a été totalement ou partiellement remplacée par la tricyclohexylphosphine.

7. Procédé selon la revendication 4, dans lequel le catalyseur organométallique est un catalyseur contenant de l'osmium ayant la formule
OsQX(CO) (L) (PR₃)₂
dans laquelle Q peut être l'un d'hydrogène et un groupe phénylvinyle, X peut être l'un d'halogène, tétrahydroborate et alkyl- ou aryl-carboxylate, L peut être l'un d'une molécule d'oxygène, benzonitrile ou aucun ligand, et R peut être l'un de cyclohexyle, isopropyle, butyle secondaire et butyle tertiaire, ledit butyle tertiaire étant présent uniquement lorsqu'un R est méthyle, à condition que lorsque Q est phénylvinyle, X soit halogène et L soit aucun ligand et lorsque X est alkyl- ou aryl-carboxylate, Q soit hydrogène et L soit aucun ligand, ledit halogène étant choisi parmi chlore et brome, et de préférence Q étant hydrogène, X étant choisi parmi chlore, tétrahydroborate et acétate, L étant une molécule d'oxygène ou aucun ligand et R étant cyclohexyle ou isopropyle.

8. Procédé selon une des revendications 1 à 7, dans lequel il est également présent un co-catalyseur, de préférence triphénylphosphine.

9. Procédé selon une des revendications 1 à 8, dans lequel l'hydrogénation continue est conduite en présence d'un solvant hydrocarbure, de préférence choisi parmi benzène, toluène, xylène, monochlorobenzène et tétrahydrofurane, de préférence monochlorobenzène et tétrahydrofurane, de manière préférée entre toutes monochlorobenzène.

10. Procédé selon une des revendications 1 à 9, dans lequel le réacteur (1) équipé d'éléments internes statiques a une enveloppe pour chauffage et/ou refroidissement, de préférence ayant deux chambres ou plus qui peuvent être actionnées indépendamment.

11. Procédé selon une des revendications 1 à 10, dans lequel le caoutchouc nitrile, le solvant et l'hydrogène sont passés via un prémélangeur avant envoi au réacteur équipé d'éléments internes statiques.

12. Procédé selon la revendication 11, dans lequel le catalyseur est ajouté au prémélangeur et/ou au réacteur équipé d'éléments internes statiques.

13. Procédé selon une des revendications 1 à 12, dans lequel le catalyseur est ajouté au réacteur équipé d'éléments internes statiques à une ou plusieurs sections différentes le long de la longueur de celui-ci.

14. Procédé selon les revendications 11 ou 12, dans lequel le prémélangeur est équipé d'un agitateur, celui-ci étant de préférence un agitateur à pale chantournée ou une turbine.
